**Europäisches Patentamt**

**European Patent Office**

**Office européen des brevets**

(19)

(11) Publication number : **0 254 301 B1**

(12) # EUROPEAN PATENT SPECIFICATION

(45) Date of publication of patent specification :
28.12.94 Bulletin 94/52

(51) Int. Cl.⁵ : **H04N 5/32,** H04N 1/40,
G06F 15/68

(21) Application number : **87110630.8**

(22) Date of filing : **22.07.87**

(54) **Method of adjusting radiation image processing conditions.**

(30) Priority : **23.07.86 JP 173271/86**

(43) Date of publication of application :
**27.01.88 Bulletin 88/04**

(45) Publication of the grant of the patent :
**28.12.94 Bulletin 94/52**

(84) Designated Contracting States :
**DE FR NL**

(56) References cited :
**EP-A- 0 145 982
EP-A- 0 189 206
US-A- 4 538 227
US-A- 4 638 162**

(73) Proprietor : **Fuji Photo Film Co., Ltd.
210 Nakanuma
Minamiashigara-shi
Kanagawa-ken (JP)**

(72) Inventor : **Adachi, Yuuma Fuji Photo Film
Co.,Ltd.
798 Miyanodai
Kaisei-machi
Ashigarakami-gun Kanagawa-ken (JP)**

(74) Representative : **Patentanwälte Grünecker,
Kinkeldey, Stockmair & Partner
Maximilianstrasse 58
D-80538 München (DE)**

**Description**

BACKGROUND OF THE INVENTION

Field of the Invention

This invention relates to a method of adjusting radiation image processing conditions in a radiation image recording and reproducing system using a stimulable phosphor sheet.

Description of the Prior Art

When certain kinds of phosphors are exposed to a radiation such as X-rays, $\alpha$-rays, $\beta$-rays, $\gamma$-rays, cathode rays or ultraviolet rays, they store a part of the energy of the radiation. Then, when the phosphor which has been exposed to the radiation is exposed to stimulating rays such as visible light, light is emitted by the phosphor in proportion to the stored energy of the radiation. A phosphor exhibiting such properties is referred to as a stimulable phosphor.

As disclosed in U.S. Patent US-A-4,258,264 and Japanese Unexamined Patent Publication JP-A-56011395, it has been proposed to use a stimulable phosphor in a radiation image recording and reproducing system. Specifically, a sheet provided with a layer of the stimulable phosphor (hereinafter referred to as a stimulable phosphor sheet) is first exposed to a radiation passing through an object such as the human body to have a radiation image of the object stored thereon, and is then exposed to stimulating rays such as a laser beam which cause the stimulable phosphor sheet to emit light in proportion to the stored radiation energy. The light emitted by the stimulable phosphor sheet upon stimulation thereof is photoelectrically detected and converted to electric image signals, and the radiation image of the object is reproduced as a visible image by use of the image signals on a recording medium such as a photographic film, a display device such as a cathode ray tube (CRT), or the like.

One embodiment of the aforesaid radiation image recording and reproducing system is disclosed in, for example, Japanese Unexamined Patent Publication JP-A-58067240. In the disclosed embodiment, the stimulable phosphor sheet carrying a radiation image of an object stored thereon is scanned by stimulating rays which cause the stimulable phosphor sheet to emit light in proportion to the stored radiation energy, and the emitted light is detected by a photoelectric read-out means to obtain electric image signals for use in reproduction of a visible image. Then, the electric image signals are sent to an image processing means and are processed by use of image processing conditions in accordance with the image recording portion of the object and/or the image recording method to obtain a visible image suitable for viewing, particularly for diagnostic purposes. The processed image signals are used to reproduce the visible image on a photographic film or the like.

By the term "image processing conditions" as used herein are meant various conditions such as an emphasis coefficient in a frequency response processing, and various characteristic values in a gradation processing.

When the image processing is carried out by use of the image processing conditions adjusted on the basis of the image information stored on the stimulable phosphor sheet, the image processing can be achieved appropriately in accordance with the object and the image recording portion of the object, and a desirable visible image can always be obtained.

As the method of adjusting the image processing conditions in the image processing on the basis of the image information obtained by the image read-out, the applicant proposed in U.S. Patent US-A-4,276,473 a novel method comprising the steps of: determining a histogram of the amount of light emitted by a stimulable phosphor sheet in image read-out, calculating the maximum light emission amount Smax and the minimum light emission amount Smin of a desired image information range in the histogram, and adjusting the image processing conditions in the image processing so that the maximum light emission amount Smax and the minimum light emission amount Smin correspond respectively to the maximum density Dmax and the minimum density Dmin of a correct density range in the reproduced visible image.

On the other hand, in the case where radiation image recording and reproducing system is used for medical diagnosis, portions of the human body not related to diagnosis should not be exposed to radiation since the radiation is harmful to the human body. Further, when the human body portions not related to diagnosis are exposed to radiation, the radiation is scattered by such portions to the portion related to the diagnosis, and the contrast and resolution are adversely affected by the scattered radiation. Therefore, in many cases, the irradiation field should be limited when a radiation image is recorded. Normally, when the irradiation field is limited, radiation scattered by the object within the irradiation field passes outside of the irradiation field. The scattered radiation is absorbed and stored on the stimulable phosphor sheet which exhibits high sensitivity, and therefore the histogram of the light emission amount obtained by the image read-out includes the light emission amount caused by the scattered radiation. Since the light emission amount caused by the scattered radiation outside of the irradiation field on the stimulable phosphor sheet is often equal to or larger than the light emission amount within the irradiation field, it is not always possible to discriminate between the light emission amounts inside and outside of the irradiation field in the histogram obtained by the image read-out. As a result, when Smax and Smin are calculated from the histogram as mentioned above and the image processing conditions are adjusted on the basis of Smax and Smin, the minimum light emission amount within the irradiation field is not detected as Smin, and that caused by the scattered radiation outside of the irradiation field is detected as Smin. In general, the minimum light emission amount outside of the irradiation field is smaller than that within the irradiation field. Accordingly, when the minimum light emission amount outside of the irradiation field is detected as Smin, signals caused by the scattered radiation not related to diagnosis and taken within a low density range are considered in the image processing, and the density of the image of the portion related to diagnosis becomes too high. As a result, the image contrast decreases and it becomes difficult to make an accurate diagnosis.

Namely, when a radiation image is recorded by limiting the irradiation field, radiation scattered by the object passes outside of the irradiation field on the stimulable phosphor sheet and causes noise in the image information obtained by the image read-out. Therefore, in the case where the image processing conditions are adjusted based on such image information, it is not always possible to adjust the image processing conditions to appropriate values and to obtain a visible image suitable for viewing, particularly for diagnostic purposes.

## SUMMARY OF THE INVENTION

The primary object of the present invention is to provide a method of adjusting radiation image processing conditions to appropriate values on the basis of image information obtained by image read-out, wherein problems caused by limitation of an irradiation field are eliminated in the case where image recording is carried out by limiting the irradiation field.

Another object of the present invention is to provide a method of adjusting radiation image processing conditions wherein the range of the irradiation field on a stimulable phosphor sheet is detected accurately on the basis of image information obtained by image read-out, whereby the image processing conditions are adjusted to appropriate values.

The present invention achieves its object by providing a method of adjusting conditions used in a processing step for processing data of a radiation image to be reproduced as a visible image comprising the steps set out in claim 1.

In the method of adjusting radiation image processing conditions in accordance with the present invention, the background portion is detected by a threshold value processing of the image information, and the image processing conditions are adjusted by using only the image information within the range of the irradiation field comprising the background portion and the object image portion surrounded by the background portion.

Therefore, it is possible to reliably eliminate a scattered radiation component which causes noise, i.e. the image information in the region outside of the irradiation field, from the image information which is obtained by the image read-out and which is used to adjust the image processing conditions. Accordingly, it becomes possible to eliminate various problems in adjustment of the image processing conditions caused by the scattered radiation component, for example, the problem that the image processing conditions are adjusted so that the visible image at the object image portion is compressed to a high density range and becomes a low-contrast image. Thus it becomes possible to adjust the image processing conditions to appropriate values.

The method of adjusting radiation image processing conditions in accordance with the present invention is applied to the image recording carried out by limiting the irradiation field wherein a background portion outside of an object image portion within the irradiation field on the stimulable phosphor sheet is present. At the background portion, since radiation directly impinges upon the stimulable phosphor sheet without passing through the object, radiation energy of a level higher than the energy level at the other portion is stored. Therefore, the light emission amount detected as the image information at the background portion becomes larger than that at the other portion. The present invention was made based on this finding.

In the case where the light emission amount at the background portion is always larger than that at the other portion, it is possible to discriminate the background portion from the other portion, i.e. to detect the position, shape, or the like, of the background portion, by subjecting the image information to a threshold value processing, for example, by converting the image information into the two-valued system by use of a predetermined threshold value. Since the background portion is positioned around the object, the region surrounded by the detected background portion may be recognized as the object image portion. As a result, it is possible to detect with high accuracy the irradiation field constituted by the background portion and the object image portion.

In the method of adjusting radiation image processing conditions in accordance with the present invention, adverse effects of the scattered radiation component outside of the irradiation field on the adjustment of the image processing conditions are eliminated by detecting the background portion by a threshold value processing of the image information, recognizing the irradiation field in an appropriate manner on the basis of the detected background portion, and adjusting the image processing conditions based only on the image information within the irradiation field.

By the term "threshold value processing" as used herein is meant the processing for discriminating between the levels of the image information with respect to a threshold value, for example, conversion of the image information into the two-valued system carried out by regarding one level side of the image information with respect to a single threshold value as "1" and the other level side of the image information as "0". Two or more threshold values may be used. For example, the image information may be converted into the three-valued system by use of two threshold values.

By the term "portion surrounded by background portion" as used herein is broadly meant the portion which is present inside of the background portion. Thus it means not only a portion completely surrounded by the background portion but also a portion sandwiched by the background portion and a peripheral portion of the stimulable phosphor sheet or by more background portions.

The aforesaid image information inside of the irradiation field may be the image information of the whole irradiation field or of a part of the irradiation field. In the latter case, the image information should preferably include at least the image information of the major part of the object.

## BRIEF DESCRIPTION OF THE DRAWINGS

Figure 1 is a schematic view showing image information stored on a stimulable phosphor sheet and converted into the two-valued system,

Figure 2 is a schematic view showing the step of searching a sheet side at which an object image portion is present,

Figure 3 is a schematic view showing the step of recognizing the object image portion,

Figure 4 is a schematic view showing the step of converting the level of the image information of the object image portion from "0" to "1",

Figure 5 is a schematic view showing the step of setting the range of the image information which should be selected inside of the irradiation field,

Figures 6A, 6B and 6C are schematic views showing the image information recording conditions when the image of an arm is recorded by use of a rectangular irradiation field stop,

Figures 7A, 7B, 7C and 7D are schematic views showing the scan directions for 0-to-1 conversion in the cases of image recording shown in Figures 6A, 6B and 6C,

Figure 8 is a side view showing the condition of mammography using a semi-circular irradiation field stop,

Figure 9 is a schematic view showing the image information recording condition in the mammography shown in Figure 8, and

Figure 10 is a graph showing the histogram of the image information detected from the stimulable phosphor sheet carrying the breast image recorded as shown in Figure 8.

## DESCRIPTION OF THE PREFERRED EMBODIMENTS

The present invention will hereinbelow be described in further detail with reference to the accompanying drawings.

First, an embodiment of the method of adjusting radiation image processing conditions in accordance with the present invention will be described with respect to mammography using a semi-circular irradiation field stop.

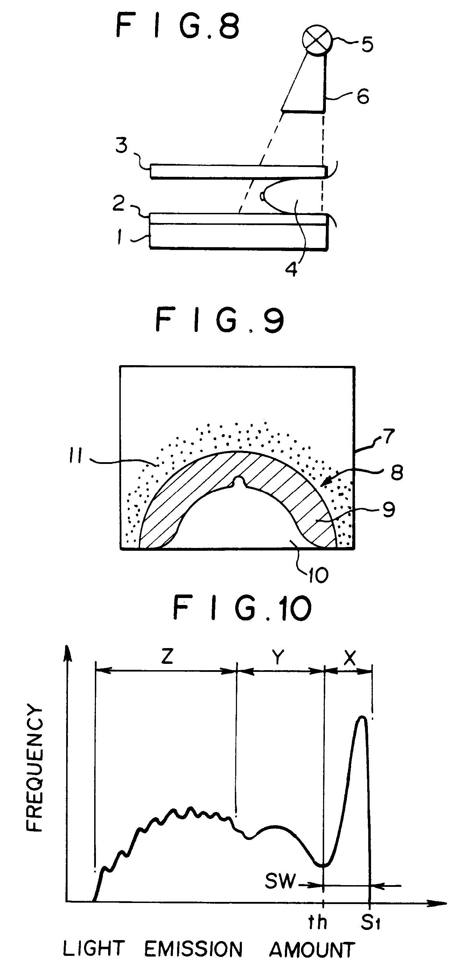

As shown in Figure 8, in mammography, a cassette 2 housing a stimulable phosphor sheet is disposed on an image recording table 1, and the object breast 4 is sandwiched and pressed between the cassette 2 and a holding plate 3 made of an acrylic resin or the like. The object 4 is exposed to radiation emitted by a radiation source 5 disposed above the holding plate 3 and passing through a conical cylinder 6 having a semi-circular cross-section.

Figure 9 is a plan view showing the image information recording condition on a stimulable phosphor sheet 7 carrying the breast image recorded as shown in Figure 8. A semi-circular irradiation field 8 is present on the stimulable phosphor sheet 7. A background portion 9 indicated by hatching is present at the peripheral portion of the irradiation field 8, and an object image portion 10 at which the object image information is stored and which is surrounded by the background portion 9 is present inside of the background portion 9. A scattered radiation image portion 11 (indicated by dots) exposed to scattered radiation is present outside of the semi-circular irradiation field 8 constituted by the background portion 9 and the object image portion 10.

Figure 10 shows the histogram of the image information which represents the light emission amounts at respective portions of the stimulable phosphor sheet 7 and which is obtained by image read-out from the stimulable phosphor sheet 7 carrying the image information stored thereon as mentioned above. X denotes the information at the background portion 9, Y denotes the information at the object image portion 10, and Z designates the information at the scattered radiation image portion 11. Since the radiation directly impinges upon the background portion 9 without passing through the object 4, the background image information X is at the region of the maximum light emission amount. At the scattered radiation image portion 11, the level of the radiation energy of the scattered radiation is low. Therefore, the scattered radiation image information Z is at the region of small light emission amount.

Thus the image information X at the background portion 9 has a width (distribution) SW caused by nonuniformity in irradiation, sensitivity of the stimulable phosphor sheet, and the like, and occupies the region of the maximum light emission amount among the whole image information.

In this embodiment, the information at the background portion is detected by converting the image information into the two-valued system by use of a threshold value th.

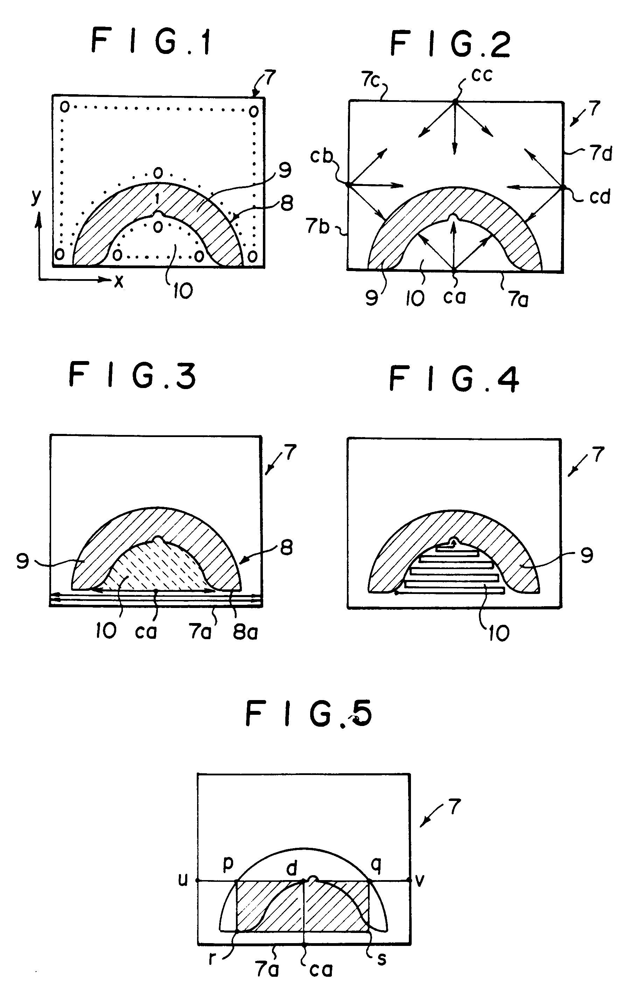

Specifically, by converting the image information by use of the threshold value th (th=S1-SW) at the width SW from the maximum light emission amount S1 in the histogram of the image information shown in Figure 10, it is possible to separate the image information into the information at the background portion and the information at the other portion. Therefore, when the image information f(x,y) is converted into the two-valued system, for example, as expressed by the formula shown below, and two-valued image information d(x,y) is obtained, the two-valued image information d(x,y) becomes as shown in Figure 1 and it becomes possible to detect the region of d(x,y)=1 indicated by hatching as the background portion 9.

$$d(x,y) = \begin{cases} 0 \text{ if } f(x,y) < th \\ 1 \text{ if } f(x,y) \geqq th \end{cases}$$

where (x,y) designates the position of the read-out picture element on the stimulable phosphor sheet 7.

The threshold value th is determined by subtracting the predetermined width SW from the maximum light emission amount S1 among the light emission amounts at respective picture elements. In this embodiment, the threshold value th may be determined by creating the histogram of the image information as shown in Figure 10 and calculating from S1 and SW determined based on the histogram. Or, the threshold value th may be determined directly based on the shape of the histogram. It is also possible to calculate the threshold value th from S1 obtained from the image information and SW determined in advance from experimental data or by calculation without creating the histogram.

Then, the image information inside of the irradiation field constituted by the background portion detected as mentioned above and the object image portion surrounded by the background portion is selected from the whole image information. Since the background portion is positioned at the peripheral portion of the irradiation field and the object image portion is positioned inside of the background portion by being surrounded thereby, the object image portion surrounded by the background portion can be detected directly from the background portion when the background portion is detected. Or, the object image portion surrounded by the background portion can be detected by combining the background portion with the easily available information on the shape of the irradiation field or the image recording portion of the object. When the background portion is detected in this manner and the object image portion is detected on the basis of the background portion, it becomes possible to recognize the irradiation field constituted by the background portion and the object image portion and to select the image information inside of the recognized irradiation field from the aforesaid image information.

In this embodiment, from the known information on the mammography, the semi-circular irradiation field and the image recording apparatus shown in Figure 8, it is possible to know that the object image portion 10 is positioned at the center of one side of the stimulable phosphor sheet 7 and surrounded by the arc-shaped background portion 9 and one side of the sheet 7. Therefore, as shown in Figure 2, presence of the value "1" is first searched from each of center points ca, cb, cc and cd of sheet sides 7a, 7b, 7c and 7d towards the other sides (the values at the center points are "0"), i.e. at directions of 45°, 90° and 135° from each of the center points ca, cb, cc and cd. In this manner, the object image portion 10 is regarded to be present at the side 7a at which the value "1" is detected in all of the three search directions.

Normally, the "0" value region surrounded by the side 7a and the background portion 9 may be regarded as the object image portion 10. However, as shown in Figure 3, there may be the case where a straight line portion 8a of the semi-circular irradiation field 8 is positioned more inward than the sheet side 7a. Therefore, when the sheet side 7a at which the object image portion 10 is recorded is found, the value "1" is searched from the center point ca of the side 7a at direction angles of 0° and 180° with respect to the side 7a. Searching is repeated by shifting the searching position by one picture element at a time in the 90° direction until the value "1" is found in the two directions. The region hatched with broken lines and surrounded by the searching line on which the presence of the value "1" is detected in the two directions and the background portion 9 is regarded as the object image portion 10.

After the object image portion 10 is recognized in this manner, the two-valued image information d(x,y)=0 at the object image portion 10 is entirely converted into d(x,y)=1. Specifically, as shown in Figure 4, the value "0" at all positions inside of the object image portion 10 is converted to the value "1" by scanning the object image portion 10.

In this manner, corrected two-valued image information d'(x,y) in which the values of the background portion 9 and the object image portion 10 are "1" and the values at the other portions are "0" is obtained. By ANDing the corrected two-valued image information d'(x,y) with the original image information f(x,y), i.e. by multiplying the image information at each picture element by the corrected two-valued image information at the picture element, there is obtained new corrected image information f'(x,y) in which the value of the region where the corrected two-valued image information was "0" is "0" and the regions of the background portion and the object image portion at which the values were "1" remain equal to the original image information.

That is, by processing as mentioned above, it is possible to select only the image information within the irradiation field 8 constituted by the background portion 9 and the object image portion 10 from the whole image information.

Any method may be used to select the image information within the irradiation field insofar as the background portion detected as mentioned above is utilized.

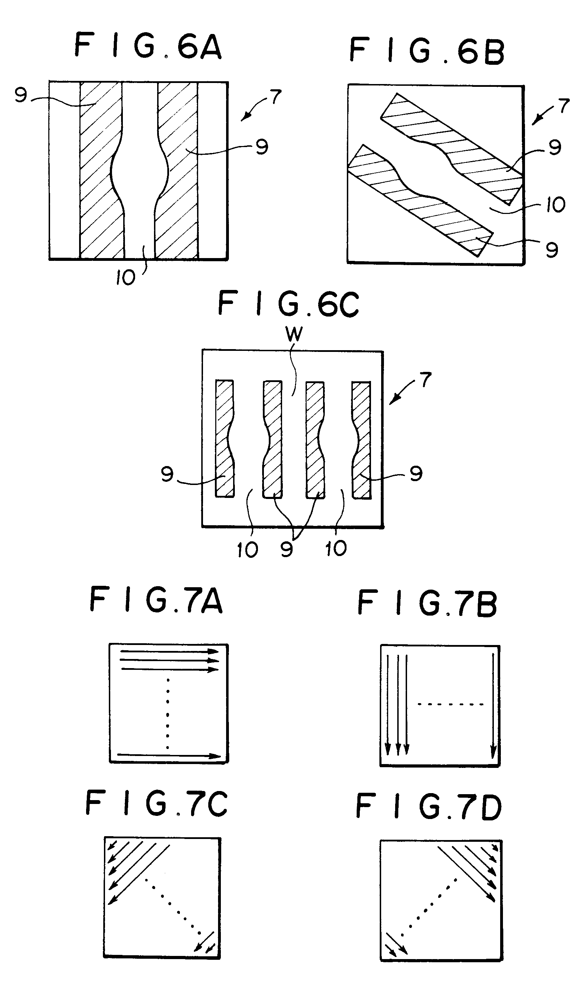

For example, as shown in Figure 5, the two-valued image information d(x,y) is searched in the 90° direction from the center point ca of the side 7a of the stimulable phosphor sheet carrying the radiation image stored thereon. When the value "1" is found at a point d, searching of the value "1" is carried out from two ends of a line u-v passing through the point d and parallel to the side 7a. Points at which the value "1" is found are taken as p and q, and searching is continued from the points p and q along the lines normal to the side 7a and the line u-v. Points at which the value "0" is found simultaneously along the lines normal to the side 7a are taken as r and s, and the image information at the region indicated by the hatching and surrounded by the points p, q, r and s is selected.

Thereafter, the image processing conditions are adjusted on the basis of the image information inside of the irradiation field region selected as mentioned above. The image processing conditions may be adjusted in various manners based on the image information inside of the selected irradiation field region. For example, a histogram of the image information is created, Smax and Smin are calculated from the histogram, and the image processing conditions are adjusted on the basis of Smax and Smin.

The image processing conditions may be adjusted on the basis of only the selected image information or by considering also the image recording portion of the object such as the head, the chest or the abdomen, and the image recording method such as plain image recording, contrasted image recording, tomography or enlargement image recording.

Another embodiment of the method of adjusting radiation image processing conditions in accordance with the present invention wherein an image of the limb or the neck is recorded by use of a rectangular irradiation field stop will hereinbelow be described.

In general, in the case where the image recording is carried out by use of a rectangular irradiation field stop, as shown in Figures 6A, 6B and 6C, two band-like background portions 9, 9 as indicated by hatching are present, and the object image portion 10 is present sandwiched between the background portions 9, 9. Figure 6A shows the case where an image of an arm as the image recording portion of the object is recorded on the stimulable phosphor sheet 7 by disposing the arm parallel to one side of the sheet 7 and disposing the rectangular irradiation field stop so that the respective sides thereof are parallel to the respective sides of the sheet 7. Figure 6B shows the case where the arm image is recorded by disposing the arm and the rectangular irradiation field stop obliquely with respect to the sheet 7. Figure 6C shows the case of subdivision image recording in which image recording is carried out separately on the right half and the left half of the sheet 7.

In this embodiment, the image information is first converted into the two-valued system by using a predetermined threshold value th as in the aforesaid embodiment. The conversion into the two-valued system is equivalent to detection of the background portions 9, 9.

Then, as shown in Figure 7A, the two-valued image information is scanned in the main scanning direction in the image read-out, and the value "0" present between the value "1" and the value "1" is converted into the value "1". This converting operation is carried out for all of the scanning lines in the sub-scanning direction. Also, as shown in Figures 7b, 7C and 7D, the converting operation is carried out at angles of 90°, 45° and l35° with respect to the main scanning direction.

By carrying out the 0-to-1 conversion in four directions as mentioned above, the information at all or most of the region of the object image portion 10 sandwiched between the background portions 9, 9 is converted from the value "0" to the value "1" in the cases of both Figures 6A and 6B. In the corrected two-valued image information d'(x,y) obtained by the conversion, the information at the irradiation field region has the value "1", and the other regions have the value "0".

After the corrected two-valued image information d'(x,y) is created in the manner as mentioned above, the image information only within the irradiation field region is selected by ANDing the information d'(x,y) with the original image information f(x,y). On the basis of the selected image information, the image processing conditions are adjusted.

The aforesaid 0-to-1 conversion is carried out only between an odd-numbered background portion and the subsequent even-numbered background portion where the value "1" appears continuously, and is not carried out between an even-numbered background portion and the subsequent odd-numbered background portion. In this case, in the subdivision image recording as shown in Figure 6C, only the information at the object image portions 10, 10 is converted, and the information at the portion W which is present between the background portions but is not an object image portion is not converted. In the case of the subdivision image recording, since the object and the irradiation field stop are normally not positioned obliquely with respect to the stimulable phosphor sheet, scanning for the conversion may be carried out only in two directions as shown in Figures 7A and 7B. Also, in the case where one side of the object and one side of the irradiation field are parallel to one known side of the stimulable phosphor sheet, scanning for the conversion may be carried out only in the single direction shown in Figure 7A or 7B. For example, in the case of Figure 6A, scanning may be carried out only in the single direction shown in Figure 7A.

## Claims

1. A method of adjusting conditions used in a processing step for processsing data of a radiation image to be reproduced as a visible image in which read-out of a stimulable phosphor sheet carrying radiation image information of an object stored thereon by limitation of an irradiation field is carried out by exposing the stimulable phosphor sheet to stimulating rays which cause the stimulable phosphor sheet to release the radiation image information as light emission in proportion to the stored radiation energy, the light emitted by the stimulable phosphor sheet is photoelectrically detected to obtain electric image signals which are sent to a means for carrying out said radiation image data processing step to be processed by use of said conditions which have been accordingly adjusted,
   **characterised by** comprising the steps of:
   i) subjecting the image information obtained by image read-out to a threshold value processing to detect a background portion inside of the irradiation field;
   ii) selecting from said obtained image information, image information inside of the irradiation field constituted by said background portion and an object image portion surrounded by said background portion; and
   iii) adjusting said conditions on the basis of said selected image information.

2. A method as defined in Claim 1 wherein said threshold value processing is a processing for converting said obtained image information into a two-valued system by use of a predetermined threshold value.

3. A method as defined in Claim 1 or 2 wherein said threshold value processing is carried out by creating a histogram of said obtained image information and using a threshold value determined on the basis of said histogram.

4. A method as defined in Claim 1 wherein said object image portion is detected by searching the information obtained by said threshold value processing at least in one direction from a predetermined point on said stimulable phosphor sheet.

5. A method as defined in Claim 1 wherein said image information inside of the irradiation field is selected by correcting the threshold value-processed image information so that the information at said background portion and the information at said object image portion have a value different from the value at the other portion, and ANDing said corrected, threshold value-processed image information with the original obtained image information.

6. A method as defined in Claim 1 wherein said image processing conditions are adjusted by creating a histogram of said selected image information inside of the irradiation field, calculating the maximum light emission amount and the minimum light emission amount from said histogram, and carrying out adjustment based on said maximum light emission amount and said minimum light emission amount.

## Patentansprüche

1. Ein Verfahren zum Einstellen von Bedingungen, die in einem Verarbeitungsschritt zum Verarbeiten von Daten eines als ein sichtbares Bild zu reproduzierendes Strahlungsbildes verwendet werden, wobei eine Auslesung einer stimulierbaren Phosphorlage erfolgt, die Strahlungsbildinformation eines Objekts trägt, welche darauf durch Begrenzen eines Bestrahlungsfeldes gespeichert ist, wobei die Auslesung durch Exponieren der stimulierbaren Phosphorlage mit stimulierenden Strahlen erfolgt, welche die stimulierbare Phosphorlage veranlassen, die Strahlungsbildinformation als Lichtemission proportional zu der gespeicherten Strahlungsenergie zu emittieren, wobei das durch die stimulierbare Phosphorlage emittierte Licht photoelektrisch erfaßt wird, um elektrische Bildsignale zu erhalten, welche zu einer Einrichtung zum Ausführen des Strahlungsbilddatenverarbeitungsschrittes gesendet werden, um unter Verwendung der Bedingungen, welche entsprechend eingestellt worden sind, verarbeitet zu werden, gekennzeichnet durch die Verfahrensschritte:

i) Unterwerfen der durch die Bildauslesung erhaltenen Bildinformation einer Schwellwertverarbeitung, um einen Hintergrundanteil innerhalb des Bestrahlungsfeldes zu erfassen;

ii) Auswählen, aus der erhaltenen Bildinformation, von Bildinformation innerhalb des Bestrahlungsfeldes, die durch den Hintergrundanteil und einen Objektbildanteil, der von dem Hintergrundanteil umgeben ist, gebildet ist; und

iii) Einstellen der Bedingungen auf der Basis der ausgewählten Bildinformation; und

2. Ein Verfahren nach Anspruch 1, wobei die Schwellenwertverarbeitung eine Verarbeitung zum Umwandeln der erhaltenen Bildinformation in ein Zweiwertesystem unter Verwendung eines vorbestimmten Schwellenwertes ist.

3. Ein Verfahren nach Anspruch 1 oder 2, wobei die Schwellenwertverarbeitung durch Bilden eines Histogramms der erhaltenen Bildinformation und Verwenden eines auf der Basis des Histogramms bestimmten Schwellenwertes durchgeführt wird.

4. Ein Verfahren nach Anspruch 1, wobei der Objektbildanteil durch Suchen der durch die Schwellenwertverarbeitung erhaltenen Information wenigstens in einer Richtung von einem vorbestimmten Punkt auf der stimulierbaren Phosphorlage aus erfaßt wird.

5. Ein Verfahren nach Anspruch 1, wobei die Bildinformation innerhalb des Bestrahlungsfeldes durch Korrigieren der schwellenwertverabeiteten Bildinformation derart, daß die Information in dem Hintergrundanteil und die Information in dem Objektbildanteil einen Wert aufweisen, der unterschiedlich von dem Wert. in dem anderen Teil ist, und eine UND-Verknüpfung der korrigierten schwellenwertverarbeiteten Bildinformation mit der ursprünglich erhaltenen Bildinformation ausgewählt wird.

6. Ein Verfahren nach Anspruch 1, wobei die Bildverarbeitungsbedingungen durch Bilden eines Histogramms der ausgewählten Bildinformation innerhalb des Bestrahlungsfeldes, Berechnen der maximalen Lichtemissionsmenge und der minimalen Lichtemissionsmenge aus dem Histogramm und Aüsführen einer Einstellung basierend auf der maximalen Lichtemissionsmenge und der minimalen Lichtemissionsmenge eingestellt wird.

## Revendications

1. Procédé de réglage de conditions utilisé lors d'une étape de traitement permettant de traiter des données d'une image de rayonnement qui doit être produite en tant qu'image visible, dans lequel une lecture d'une feuille de phosphore stimulable porteuse d'une information d'image de rayonnement d'un objet stocké sur elle au moyen d'une limitation d'un champ d'irradiation est mise en oeuvre en exposant la feuille de phosphore stimulable à des rayons de stimulation qui provoquent au niveau de la feuille de phosphore stimulable la production de l'information d'image de rayonnement sous forme d'une émission de lumière proportionnellement à l'énergie de rayonnement stockée, la lumière émise par la feuille de phosphore stimulable étant détectée photo-électriquement afin d'obtenir des signaux d'image électriques qui sont envoyés à un moyen permettant de mettre en oeuvre ladite étape de traitement de données d'image de rayonnement pour être traitées en utilisant lesdites conditions qui ont été réglées en conséquence,

caractérisé en ce qu'il comprend les étapes de :

i) soumission de l'information d'image obtenue au moyen d'une lecture d'image à un traitement par valeur de seuil afin de détecter une partie de fond à l'intérieur du champ d'irradiation ;

ii) sélection, à partir de ladite information d'image obtenue, d'une information d'image à l'intérieur du champ d'irradiation constituée par ladite partie de fond et d'une partie d'image d'objet entourée par ladite partie de fond ; et

iii) réglage desdites conditions sur la base de ladite information d'image sélectionnée.

2. Procédé selon la revendication 1, dans lequel ledit traitement par valeur de seuil est un traitement permettant de convertir ladite information d'image obtenue en un système à deux valeurs au moyen de l'utilisation d'une valeur de seuil prédéterminée.

3. Procédé selon la revendication 1 ou 2, dans lequel ledit traitement par valeur de seuil est mis en oeuvre en créant un histogramme de ladite information d'image obtenue et en utilisant une valeur de seuil déterminée sur la base dudit histogramme.

4. Procédé selon la revendication 1, dans lequel ladite partie d'image d'objet est détectée en recherchant l'information obtenue par ledit traitement par valeur de seuil au moins suivant une direction à partir d'un point prédéterminé de ladite feuille de phosphore stimulable.

5. Procédé selon la revendication 1, dans lequel ladite information d'image à l'intérieur du champ d'irradiation est choisie en corrigeant l'information d'image qui a subi le traitement par valeur de seuil de telle sorte que l'information au niveau de ladite partie de fond et que l'information au niveau de ladite partie d'image d'objet présente une valeur différente de la valeur au niveau de l'autre partie, et en soumettant à une logique ET ladite information d'image qui a subi le traitement par valeur de seuil corrigée avec l'information d'image obtenue originale.

6. Procédé selon la revendication 1, dans lequel lesdites conditions de traitement d'images sont réglées en créant un histogramme de ladite information d'image sélectionnée à l'intérieur du champ d'irradiation, en calculant la valeur d'émission de lumière maximum et la valeur d'émission de lumière minium à partir dudit histogramme et en mettant en oeuvre un réglage basé sur ladite valeur d'émission de lumière maximum et sur ladite valeur d'émission de lumière minimum.

# F I G . 1

# F I G . 2

# F I G . 3

# F I G . 4

# F I G . 5

FIG.6A

FIG.6B

FIG.6C

FIG.7A

FIG.7B

FIG.7C

FIG.7D

# F I G . 8

# F I G . 9

# F I G . 1 0

FREQUENCY

LIGHT EMISSION AMOUNT